# EUROPÄISCHE PATENTSCHRIFT

(11) **EP 3 556 606 B1**
(45) Veröffentlichungstag und Bekanntmachung des Hinweises auf die Patenterteilung: **11.08.2021**
(21) Anmeldenummer: 19165265.0
(22) Anmeldetag: 26.03.2019
(51) Int. Cl.: B60P 3/00, B60P 3/055, B60P 7/08, B60P 7/10

(54) **VORRICHTUNG ZUR LAGERUNG VON KISTEN**
DEVICE FOR STORING BOXES
DISPOSITIF DE STOCKAGE DE CAISSES

(30) Priorität: 16.04.2018 DE 102018108907
(43) Veröffentlichungstag der Anmeldung: 23.10.2019
(73) Patentinhaber: Sortimo International GmbH, 86441 Zusmarshausen (DE)
(72) Erfinder: Stegherr, Franz, 86391 Stadtbergen (DE)
(74) Vertreter: Charrier Rapp & Liebau

(56) Entgegenhaltungen:
- DE-A1- 19 514 605
- FR-A1- 2 804 095
- US-A- 3 877 671
- US-A1- 2004 253 071

## Beschreibung

Die Erfindung betrifft eine Vorrichtung zur Lagerung von Kisten nach dem Oberbegriff des Anspruchs 1. Insbesondere dient die Erfindung der Lagerung und dem Transport von Getränkekisten in Fahrzeugen, wo die Getränkekisten nicht nur sicher abgestellt werden müssen, sondern auch vor Herunterfallen bei Erschütterungen des fahrenden Fahrzeugs zu schützen sind.

Aus dem Stand der Technik sind Einbauregale für Fahrzeuge mit wannenförmigen Aufnahmen bekannt, in welche Kisten, z.B. Getränkekisten, einstellbar sind. Diese weisen den Nachteil auf, dass die Sicherung der Kisten nur unzureichend ist, weil sie, wenn sich das Fahrzeug über Bodenwellen oder Schlaglöcher bewegt, aus den Wannen herausfallen können. Ferner ist die Entnahme umständlich und kraftraubend. Schließlich verursacht die Bewegung und das Springen der Kisten, wenn sich das Fahrzeug auf unebenem Untergrund bewegt, ein erhebliches Geräusch. Auch die Fahrzeugeinrichtung wird bei dieser Bewegung der Kisten innerhalb des Regals verschlissen.

Die DE 195 14 605 A1 beschreibt eine Vorrichtung zur Lagerung von Behältern im Kofferraum eines Fahrzeugs mit einem Bodenteil und zwei Seitenteilen, welche eine Art Wanne bilden. Das Bodenteil weist einen parallel zu den Seitenteilen verlaufenden Schlitz auf, in welchem ein Gurthalter verschiebbar gelagert ist. Der Gurt lässt sich über den zu lagernden Behälter spannen und an einem gleich ausgebildeten Gurthalter, der ebenfalls in dem Schlitz geführt ist, einhängen, sodass das Gepäckstück bzw. der Behälter gesichert ist.

Die DE 199 49 550 A1 hat ein Transportsystem zum Gegenstand, wobei ein Transportbehälter quaderförmig ausgebildet und hinsichtlich seiner Außenabmessungen standardisiert ist, wobei die zugehörigen Transportmittel und Befestigungsmittel zum Positionieren und Fixieren am Transportmittel entsprechend diesem Standard ausgebildet sind.

Gegenstand der GB 847,792 sind Aufnahmeflächen für die Ladefläche von Lastkraftwägen, zur sichereren Lagerung der zu transportierenden Waren.

Ausgehend von der erstgenannten Druckschrift stellt sich die Aufgabe, eine Vorrichtung zur Lagerung von Kisten, insbesondere Getränkekisten, innerhalb eines Fahrzeugs so auszubilden, dass die Kisten ohne allzu großen Kraftaufwand entnehmbar sind und eine sichere, zuverlässige, geräusch- und verschleißarme Lagerung auch dann gegeben ist, wenn sich das Fahrzeug auf unebenem Untergrund bewegt.

Gelöst wird diese Aufgabe mit den kennzeichnenden Merkmalen des Anspruchs 1. Vorteilhafte Ausgestaltungen sind den Unteransprüchen entnehmbar.

Erfindungsgemäß weist die Kistenlagerungsvorrichtung ein Grundgestell mit mehreren Regalpfosten oder Seitenwänden, und mindestens eine längliche Wanne mit einem rechteckigen Boden und einer oder zwei Längsseiten auf, wobei der Boden einen parallel zu den Längsseiten verlaufenden Schlitz aufweist, in welchem ein Gleitstück verschiebbar gelagert ist, an welchem ein Ende eines flexiblen Zugmittels befestigt ist. Das andere Ende dieses flexiblen Zugmittels ist an einer Breitseite der Seitenwand angeordnet, welche sich im dem Benutzer zugewandten vorderen Bereich der Vorrichtung befindet. An dieser Breitseite befindet sich eine Klemmvorrichtung für das flexible Zugmittel, sodass dieses dort eingeklemmt werden kann. Eine weitere Breitseite kann an der Rückseite der Wanne angeordnet sein. Diese verläuft dann parallel zur ersten Breitseite. Die Wanne ist abfallend in einem Winkel von 8° bis 20 ° angeordnet, sodass die darin gelagerten Kisten aufgrund der Schwerkraft nach vorn in Richtung des Benutzers gleiten. Wenn die vordere Kiste entnommen wird, gleiten die dahinterstehenden nach.

In einer vorteilhaften Ausgestaltung zur Lagerung handelsüblicher Getränkekisten beträgt die lichte Breite der Wanne, also der Abstand der beiden Längsseiten voneinander zwischen 25 cm und 50 cm und die Länge der Wanne, also der Abstand der beiden Breitseiten voneinander zur Aufnahme von vier bis sechs handelsüblichen Getränkekisten zwischen 80 cm und 250 cm.

Das Grundgestell weist mehrere Regalpfosten oder Seitenwände auf, in welchem vorteilhaft mehrere Wannen übereinander aufgenommen werden können. In einer vorteilhaften Ausgestaltung ist das flexible Zugmittel ein Seil oder ein Gurt.

Ebenfalls vorteilhaft ist es, wenn das Gleitstück aus einem im Wesentlichen oberhalb des Schlitzes befindlichen Gleitbock und einer im Wesentlichen unterhalb des Schlitzes befindlichen Gegenplatte besteht, welche mit dem Gleitbock verbunden ist. Die Klemmvorrichtung ist vorzugsweise als Curry-Klemme ausgebildet.

Ein Ausführungsbeispiel der Erfindung wird im Folgenden unter Bezugnahme auf die begleitenden Zeichnungen näher beschrieben. Diese zeigen:
**Fig. 1****:** Eine perspektivische Darstellung eines die erfindungsgemäß Vorrichtung beinhaltenden Regals zum Einbau in ein Kraftfahrzeug;
**Fig. 2****:** Eine Seitenansicht der in Figur 2 dargestellten Anordnung aus Richtung A;
**Fig. 3****:** Eine Vorderansicht der Anordnung aus Fig. 2 aus Richtung B;
**Fig. 4****:** Eine Ansicht des Bodens einer alternativen Ausführungsform einer Wanne von oben;
**Fig. 5****:** Einen vergrößerten Querschnitt durch Fig. 4 entlang A-A.

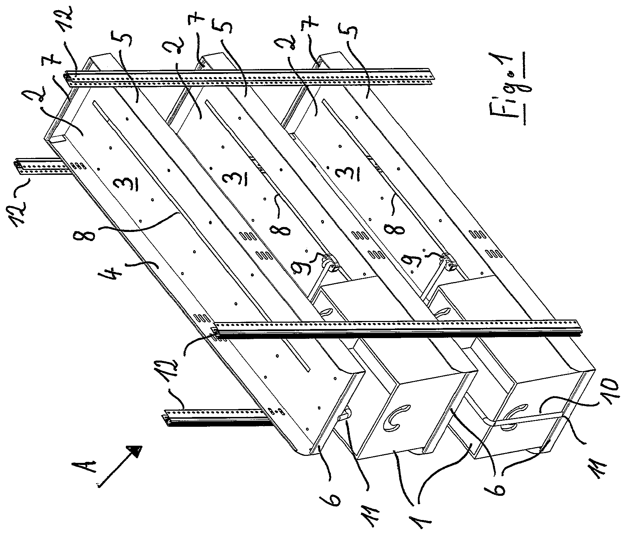

Die Figuren 1 - 3 zeigen die erfindungsgemäße Vorrichtung zur Lagerung von Kisten 1, hier Getränkekisten 1, anhand eines Ausführungsbeispiels, bei dem sich drei übereinanderliegende Wannen 2 innerhalb eines aus vier Regalpfosten 12 bestehenden Grundgestells befinden. Die Regalpfosten 12 sind handelsübliche Regalpfosten aus einem Stahl- oder Aluminiumprofil mit Lochungen oder Bohrungen zur Aufnahme von Regalträgern, wodurch Regalbretter oder, wie im vorliegenden Fall, Wannen 2 zwischen den Regalpfosten 12 befestigt werden und mit diesen verschraubt werden können. Sowohl die Regalpfosten als auch - in einer alternativen Ausführungsform - Seitenwände als auch die Wannen selbst können aus Blech oder Holz oder Kunststoff oder einem anderen geeigneten Material bestehen.

Bei der in den Figuren 1 - 3 dargestellten Ausführungsform befinden sich zwischen den vier das Grundgestell bildenden Regalpfosten 12 drei übereinanderliegende Wannen 2. Jede Wanne 2 weist einen Boden 3 und eine sich daran anschließende, nach oben ragende Seitenwand auf, wobei jede Seitenwand aus zwei Längsseiten 4 bzw. 5 und zwei Breitseiten 6 bzw. 7 besteht. In dem dargestellten Ausführungsbeispiel sind die vorderen Breitseiten 6 jeder Seitenwand jeder Wanne 3 von geringerer Höhe als die anderen Teile der Seitenwand, nämlich die hintere Breitseite 7 und die beiden Längsseiten 4 und 5, um das Entnehmen der Getränkekisten 1 über die vordere Breitseite 6 zu erleichtern.

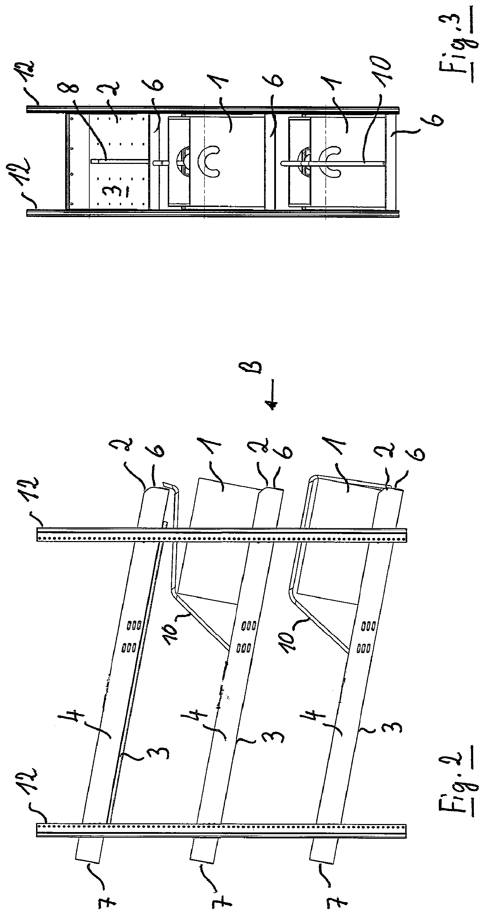

Wie insbesondere Figur 2 zu entnehmen ist, sind die Wannen 2 derart zwischen den Regalpfosten 12 angeordnet und an diesen befestigt, dass sie, gesehen von den hinteren Breitseiten 7 zu den vorderen Breitseiten 6 unter einem Winkel von ca. 12° nach vorn geneigt sind. Die vordere Breitseite 6, an welcher die Wannen 2 mit den Getränkekisten 1 befüllt und entleert werden, liegt somit niedriger als die hintere Breitseite 7.

Der Abstand der beiden Längsseiten 4 und 5 voneinander ist so gewählt, dass handelsübliche Getränkekisten 1 mit einem geringen Spiel in die Wanne 2 passen. Die Länge der Wanne 2, also der Abstand der beiden Breitseiten 6 und 7 voneinander, ist so gewählt, dass zwischen drei und sechs Getränkekisten 1 in jede Wanne 2 eingeschoben werden können.

Jede Wanne 2 weist etwa in der Mitte ihres Bodens 3, also mittig zwischen den beiden Längsseiten 4 und 5 einen parallel zu diesen Längsseiten 4 bzw. 5 verlaufenden durchgehenden Schlitz 8 auf. Der Schlitz endet kurz vor der hinteren Breitseite 7 und mit etwas größerem Abstand vor der vorderen Breitseite 6.

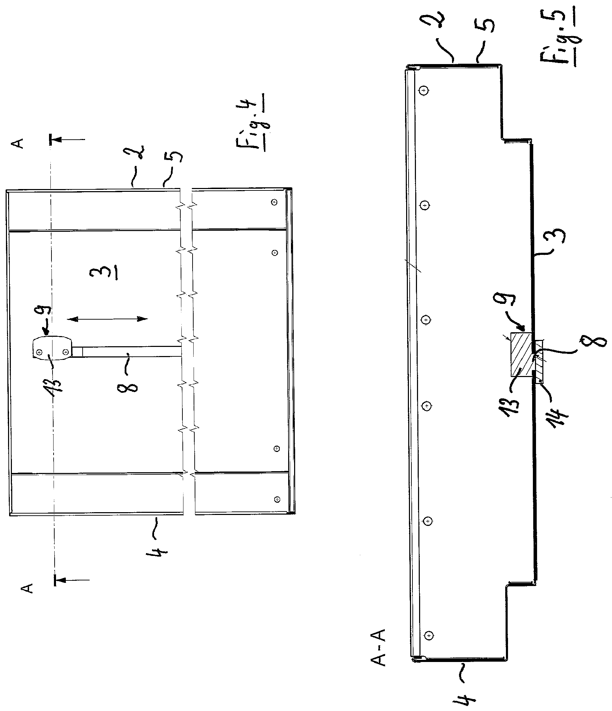

Die Figuren 4 und 5 zeigen eine Draufsicht auf eine alternative Ausführungsform einer Wanne 2, bei der der Boden 3 im Mittelbereich etwas tiefer ist als im Randbereich. Hierdurch können bei dieser Ausführungsform auch Kisten mit einer geringeren Breite sicher aufgenommen werden, die genau in den Mittelbereich des Bodens 3 passen während die Kisten mit einer größeren Breite auf dem Randbereich des Bodens aufliegen. Im praktischen Gebrauch können die breiteren Kisten, welche auf dem Randbereich des Bodens 3 aufliegen, Bierträger sein, während die schmaleren Kisten, welche auf dem Mittelbereich des Bodens 3 aufliegen, Mineralwasserkisten sind.

Innerhalb des Schlitzes 8 befindet sich in allen Ausführungsformen ein in diesem verschiebbar gelagertes Gleitstück 9, welches näher in Figur 4 dargestellt ist. In Figur 5 ist dargestellt, dass sich das Gleitstück 9 aus einem im Wesentlichen oberhalb des Schlitzes 8 befindlichen Gleitbock 13 und einer im Wesentlichen unterhalb des Schlitzes 8 befindlichen Gegenplatte 14 zusammensetzt, die mit dem Gleitbock 13 durch eine Verschraubung, welche durch den Schlitz 8 hindurch reicht, verbunden ist. Im in Figur 5 dargestellten Ausführungsbeispiel weist der Gleitbock 13 eine Hervorstehung auf, welche genau in den Schlitz 8 eingreift, während die Gegenplatte 14 eben ist und lediglich eine Öffnung zum Durchtritt einer Schraube aufweist, die in ein entsprechendes Gewinde des Gleitbocks eindrehbar ist, wobei sicherzustellen ist, dass zwischen dem Gleitbock 13 und der Gegenplatte 14 ein ausreichender, die Dicke des Bodens 3 der Wanne 2 übersteigender Abstand verbleibt, so dass ein leichtes Verschieben des Gleitstücks 9 innerhalb des Schlitzes 8 möglich ist.

An dem Gleitstück 9, insbesondere an dem Gleitbock 13, ist, wie Fig. 1 zu entnehmen ist, das Ende eines flexiblen Zugmittels 10 befestigt. Hierbei kann es sich beispielsweise um ein Seil oder um einen Gurt handeln. Das flexible Zugmittel 10 wird im Gebrauch der Vorrichtung, wie er in Fig. 1, unterste Wanne 2, gezeigt ist, über den oder die innerhalb der Wanne 2 zu transportierenden Getränkekisten 1 geführt und an der vorderen Breitseite 6 der Wanne 2, welche hierzu eine Klemmvorrichtung 11 aufweist, festgelegt. Eine solche Klemmvorrichtung für Seile ist beispielsweise aus dem Segelsport als Curry-Klemme bekannt. Jedoch sind auch andere Klemmvorrichtungen oder Befestigungsvorrichtungen für das freie Ende des flexiblen Zugmittels 10 möglich.

Bei der in den Figuren 1 - 3 mittig dargestellten Wanne 2 wird das flexible Zugmittel 10 nicht an der vorderen Breitseite 6 der gleichen Wanne 2 befestigt, an der es über den zugeordneten Gleitstein befestigt ist, sondern vielmehr an der vorderen Breitseite 6 der darüber angeordneten Wanne 2.

Zum Gebrauch der erfindungsgemäßen Vorrichtung werden die Getränkekisten 1 oder andere Kisten oder Kästen über die vordere Breitseite 6 hinweggehoben und auf den Boden 3 der Wanne 2 gesetzt. Sollen mehrere Getränkekisten 1 transportiert werden, wird jede Getränkekiste 1 beim Hinzufügen einer weiteren Getränkekiste 1 auf den Boden 3 der Wanne nach hinten in Richtung der hinteren Breitseite 7 geschoben. Hierbei verschiebt sich das Gleitstück 9 innerhalb des Schlitzes 8 nach hinten.

Sobald die Wanne 2 vollständig mit Getränkekisten 1 gefüllt ist, wird das flexible Zugmittel 10, also der Gurt oder das Seil, ergriffen und über die Oberseite aller in der Wanne 2 befindlichen Getränkekisten 1 mittig geführt und das freie Ende des Zugmittels 10 sodann an der Klemmvorrichtung 11 an der Breitseite 6 der Seitenwand der Wanne 2 oder an der Breitseite 6 der darüber angeordneten Wanne 2 festgemacht. In der dargestellten Position sind die Getränkekisten 1 sicher in der Wanne 2 und damit in dem Fahrzeug verankert. Sie können nicht hüpfen, verrutschen oder scheppern, verursachen kein Geräusch und keinen Verschleiß und können auch nicht aus der Wanne 2 herausfallen.

Um die Getränkekisten 1 aus der Wanne 2 zu nehmen, wird die Klemmvorrichtung 11 des flexiblen Zugmittels 10 gelöst und das flexible Zugmittel 10 aus der Klemmvorrichtung 11 herausgenommen. Sodann können die Getränkekisten 1 entnommen werden, wobei aufgrund der Neigung der Wanne die Getränkekisten 1 entweder von selbst nach vorn rutschen oder mit geringem Kraftaufwand nach vorn gezogen werden können, um dann über die vordere Breitseite 6 der Seitenwand der Wanne 2 entnommen zu werden. Hierbei verschiebt sich das Gleitstück 9 von selbst entlang des Schlitzes 8 nach vorn in Richtung der vorderen Breitseite 6 oder wird von Hand mittels des flexiblen Zugmittels 10 nach vorn gezogen. Nach Entnahme der gewünschten Anzahl der Getränkekisten 1 kann dann das freie Ende des flexiblen Zugmittels 11 wieder über die Klemmvorrichtung an der Wanne 2 fixiert werden.

## Patentansprüche

1. Kistenlagerungsvorrichtung (1) mit einem Grundgestell mit mehreren Regalpfosten (12) oder Seitenwänden, in welchem mindestens eine längliche Wanne (2) angeordnet ist, welche einen rechteckigen Boden (3) und eine sich randseitig an diesen Boden (3) anschließende Seitenwand mit mindestens einer Längsseite (4) aufweist, wobei der Boden (3) einen parallel zu der Längsseite (4) verlaufenden Schlitz (8) aufweist, in welchem ein Gleitstück (9) verschiebbar gelagert ist, an dem ein Ende eines flexiblen Zugmittels (10) befestigt ist, **dadurch gekennzeichnet, dass** die Seitenwand mindestens eine erste Breitseite (6) aufweist, an welcher Breitseite (6) oder einer weiteren Wanne (2) eine Klemmvorrichtung (11) für das flexible Zugmittel (10) angeordnet ist, und die oder jede Wanne (2) von der ersten Breitseite (6) in einem Winkel zwischen 8 ° und 20 ° ansteigend angeordnet ist.

2. Vorrichtung nach Anspruch 1, **dadurch gekennzeichnet, dass** zur Lagerung handelsüblicher Getränkekisten (1) die lichte Breite der Wanne (2), also der Abstand der beiden Längsseiten (4, 5) voneinander, einen Wert zwischen 25 cm und 50 cm hat und/oder die Länge der Wanne (2), also der Abstand der beiden Breitseiten (6, 7) voneinander zur Aufnahme von bis zu sechs handelsüblichen Getränkekisten (1) einen Wert zwischen 80 cm und 250 cm hat.

3. Vorrichtung nach Anspruch 2, **dadurch gekennzeichnet, dass** die Seitenwand eine zweite Längsseite (5) aufweist, welche parallel zu der ersten Längsseite (4) verläuft und/oder eine zweite Breitseite (7), welche parallel zur ersten Breitseite (6) verläuft.

4. Vorrichtung nach einem der voranstehenden Ansprüche, **dadurch gekennzeichnet, dass** das flexible Zugmittel (10) ein Seil oder ein Gurt ist.

5. Vorrichtung nach einem der voranstehenden Ansprüche, **dadurch gekennzeichnet, dass** das Gleitstück (9) aus einem im Wesentlichen oberhalb des Schlitzes (8) befindlichen Gleitbock (13) und einer im Wesentlichen unterhalb des Schlitzes (8) befindlichen Gegenplatte (14) besteht, die mit dem Gleitbock (13) verbunden ist.

6. Vorrichtung nach einem der voranstehenden Ansprüche, **dadurch gekennzeichnet, dass** die Klemmvorrichtung (11) als Curry-Klemme ausgebildet ist.

## Claims

1. Device (1) for storing boxes having a base frame with several shelf posts (12) or side walls in which at least one elongated trough (2) is arranged which has a rectangular base (3) and a side wall adjoining this base (3) on the edge side with at least one longitudinal side (4), wherein the base (3) has a slot (8) running parallel to the longitudinal side (4) in which a sliding contact (9) is mounted to be displaceable, to which one end of a flexible traction means (10) is attached, **characterised in that** the side wall has at least one first short side (6), on which short side (6) or a further trough (2) is arranged a clamping device (11) for the flexible traction means (10), and the or each trough (2) is arranged rising from the first short side (6) at an angle between 8 ° and 20 °.

2. Device according to claim 1, **characterised in that** to store commercially available drinks boxes (1), the internal breadth of the trough (2), that is, the distance of the two longitudinal sides (4, 5) from one another, has a value between 25 cm and 50 cm and/or the length of the trough (2), that is, the distance of the two short sides (6, 7) from one another to receive up to six commercially available drinks boxes (1), has a value between 80 cm and 250 cm.

3. Device according to claim 2, **characterised in that** the side wall has a second longitudinal side (5) which runs parallel to the first longitudinal side (4) and/or a second short side (7) which runs parallel to the first short side (6).

4. Device according to one of the preceding claims, **characterised in that** the flexible traction means (10) is a rope or a belt.

5. Device according to one of the preceding claims, **characterised in that** the sliding contact (9) consists of a sliding support (13) located substantially above the slot (8) and a counter-plate (14) located substantially below the slot (8) which is connected to the sliding support (13).

6. Device according to one of the preceding claims, **characterised in that** the clamping device (11) is configured as a curry clamp.

## Revendications

1. Dispositif de stockage de caisses (1) avec un châssis de base avec plusieurs montants de rayonnage (12) ou parois latérales, dans lequel est disposé au moins un bac (2) allongé, lequel présente un fond rectangulaire (3) et une paroi latérale se raccordant côté bord audit fond (3) avec au moins un côté longitudinal (4), dans lequel le fond (3) présente une entaille (8) s'étendant de manière parallèle par rapport au côté longitudinal (4), dans laquelle est montée de manière à pouvoir coulisser une pièce coulissante (9), sur laquelle est fixée une extrémité d'un moyen de traction (10) flexible, **caractérisé en ce que** la paroi latérale présente au moins un premier côté en largeur (6), sur lequel côté en largeur (6) ou un autre bac (2) est disposé un dispositif de serrage (11) pour le moyen de traction (10) flexible, et le ou chaque bac (2) est disposé de manière à monter par rapport au premier côté en largeur (6) selon un angle entre 8° et 20°.

2. Dispositif selon la revendication 1, **caractérisé en ce que** pour stocker des caisses de boisson (1) disponible dans le commerce, la petite largeur du bac (2), donc la distance entre les deux côtés longitudinaux (4, 5) l'un de l'autre, a une valeur entre 25 cm et 50 cm et/ou la longueur du bac (2), donc la distance entre les deux côtés en largeur (6, 7) l'un de l'autre, a une valeur entre 80 cm et 250 cm pour recevoir jusqu'à six caisses de boisson (1) disponibles dans le commerce.

3. Dispositif selon la revendication 2, **caractérisé en ce que** la paroi latérale présente un deuxième côté longitudinal (5), lequel s'étend de manière parallèle par rapport au premier côté longitudinal (4), et/ou un deuxième côté en largeur (7), lequel s'étend de manière parallèle par rapport au premier côté en largeur (6).

4. Dispositif selon l'une quelconque des revendications précédentes, **caractérisé en ce que** le moyen de traction (10) flexible est un câble ou une sangle.

5. Dispositif selon l'une quelconque des revendications précédentes, **caractérisé en ce que** la pièce coulissante (9) est constituée d'un support coulissant (13) se trouvant sensiblement au-dessus de l'entaille (8) et d'une contre-plaque (14) se trouvant sensiblement sous l'entaille (8), qui est reliée au support coulissant (13).

6. Dispositif selon l'une quelconque des revendications précédentes, **caractérisé en ce que** le dispositif de serrage (11) est réalisé comme un taquet coinceur.
